# EUROPEAN PATENT SPECIFICATION

(11) **EP 1 889 649 B1**
(45) Date of publication and mention of the grant of the patent: **17.11.2010**
(21) Application number: 07110556.3
(22) Date of filing: 19.06.2007
(51) Int. Cl.: B01D 53/00, B01D 53/14, B01D 53/38

(54) **A method and device for purifying and recovering energy from flue gases**
Verfahren und Vorrichtung zur Reinigung und Wiederherstellung von Energie aus Rauchgasen
Procédé et dispositif pour la purification et la récupération d'énergie à partir de gaz de combustion

(30) Priority: 16.08.2006 SE 0601691
(43) Date of publication of application: 20.02.2008
(73) Proprietor: Radscan Intervex AB, 722 26 Västeräs (SE)
(72) Inventor: Teppler, Milan, 722 43, Västerås (SE)
(74) Representative: Reyier, Ann-Mari

(56) References cited:
- EP-A- 0 298 039
- DE-A1- 3 734 292
- DE-A1- 19 808 146

## Description

### FIELD OF THE INVENTION

The present invention relates to a method and a device for purifying and recovering energy of flue gases from a boiler. The invention is useful for purifying and recovering energy from any type of boiler, independent of type of fuel used in the boiler. The invention is, for example, useful for flue gas condensing plants for handling flue gases from boilers, which for instance uses biomass or garbage as fuel.

### PRIOR ART

Flue gases from a boiler, having a temperature of typically about 130 - 160°C and typically about 25 - 30% humidity, is transferred to a condensing plant for recovering of the energy in the flue gases and for purifying the gases. Commonly, the flue gases passes through an electrostatic filter before reaching the flue gas condenser plant. A conventional flue gas condenser plant typically comprises a quench unit adapted to receive the flue gases from the boiler, to cool and to add water to moisten the flue gases in order to achieve a near saturation temperature of the flue gases, a condenser unit adapted to receive the flue gases from the quench unit and to condense the flue gases to a liquid and thereby recover energy from the flue gases, and a purifying unit adapted to receive the condensate from the condenser unit and to purify the liquid.

The flue gases from the boiler are lead to the quench unit. In the quench unit, the flue gases are purified from particles and salts and moisturized so that the temperature of the gases is lowered to reach, if possible, the saturation temperature of the gas. The quench unit comprises a container provided with a plurality of nozzles for spraying the flue gas with water. The flue gas stays in the quench unit for a short time, about one second. When reaching the quench unit, the flue gases typically have a temperature of about 130 - 160°C. In the quench unit, an amount of water, approximately in the order of 0,02 - 0,05 kg/Nm³ is added to the flue gases in order to lower the temperature to the saturation temperature of the flue gas, also denoted the dew point of the flue gas, which typically is about 65 - 70°C. At the same time, some of the contaminations in the gas, for example salts, such as NaCl, and heavy metals, are separated from the flue gas. However, much of the contaminations still remain in the gas after having passed through the quench unit.

Sometimes a droplet separator is provided between the quench unit and the condenser unit in order to prevent the gas from bringing water droplets from the quench unit to the condenser unit. When the flue gas has passed through the quench unit it is supplied to the condenser unit. The condenser unit can, for example, be a tubular cooler or a filling body scrubber. In the condenser unit, the steam is condensed and energy is thereby regained. In dependence on the cooling media in the condenser unit and moisture content of the flue, typically about 40-50%, it is possible to regain about 15 - 25% of the boiler efficiency in a flue gas condenser plant.

The condensed water from the condenser unit is purified in a purifying unit by means of a plurality of filters and membrane filters. In the purifying unit contaminations such as particles, organic matters, salts, heavy metals, and NH₃ are separated from the condensed water. The purifying unit comprises a plurality of purifying steps. Each step producing contaminated water containing different types of contamination. One of the purifying steps is a desalination process, such as a reversed osmosis (RO) process, producing a concentrated liquid including substances such as NH₄+ and heavy metals. The concentrated liquid from the reverse osmosis process is in the order of about 10 - 20% of the total amount of liquid received from the condenser unit.

An advantageous way to handle contaminations in a condenser plant is to mix the contaminations with ash from the boiler. That is advantageous since the ash becomes moisturized, which avoids it from being dusty, and the contaminations from the flue gases can be taken care of at the same time as the ash is taken care of. A problem in connection with handling the contaminated liquid from the desalination process is that the flow of contaminated water from the desalination process often is too large to mix with the ash from the boiler. Therefore, the liquid from the desalination process is today often handled outside the plant. This handling includes further concentrating the liquid and taking care of the contamination in the water. Alternatively, an evaporation unit, adapted to further concentrating the contaminated liquid and thereby reducing the flow from the desalination process is provided in the plant. Preferably, it is desired to decrease the flow from the desalination process to less than about 1 - 2% of the flow from the condenser unit in order to be able to moisturize the ash, or to be able to handle this amount of water in the plant without any considerable cost.

### OBJECTS AND SUMMARY OF THE INVENTION

The object of the present invention is to minimize the discharge of contaminated water from a flue gas condenser plant to a recipient, or to even completely eliminate the discharge, in a cost effective way.

According to one aspect of the invention this object is achieved with a method as defining claim 1.

According to another aspect of the invention this object is achieved with a device as defined in claim 4.

According to the invention, at least a fraction of the contaminated liquid part from the purifying unit is added to the flue gases in the quench unit in order to lower the temperature of the flue gases, to achieve a higher moisture content of the flue gases, and if possible to achieve the "near" saturation temperature of the gases. As the quench unit requires water to moisturize and cool the flue gas, it is advantageous to lead the contaminated liquid part from the purifying unit to the quench unit and using it for moisturizing the flue gas. In the quench unit, the contaminated liquid part from the purifying unit is concentrated, as the liquid is evaporated due to the high temperature of the flue gases in the quench unit. Thus, the quench unit is used as an evaporation unit, which increases the concentration of the contaminated liquid part and thereby reduces its content of water. Thus, the amount of contaminated water to take care has been considerably reduced. The remaining amount of contaminated water is, for example, suitable for moisturizing the ash from the boiler. It is also possible to further purify the concentrated liquid. Thereby, the discharge from the plant is reduced, or even eliminated. As no extra evaporation unit is required, costs are reduced.

According to an embodiment of the invention, the purifying unit is adapted to purify the liquid by means of a desalination process, such as a reverse osmosis process, which produces a fraction of the contaminated liquid part from the purifying unit. The invention is particularly suitable for taking care of the contaminated water from the desalination process. The liquid flow from the desalination process is too large to be feasible to add to the ashes from the boiler. However, by adding the contaminated liquid to the flue gases in the quench unit, the liquid is concentrated, i.e. the content of water is reduced, and thus the liquid flow is reduced to a suitable level for example moisturizing the ashes.

Preferably, the contaminated water from quench unit is used to moisturize ashes from the boiler. Otherwise, it has to be cleaned further on before discharge to recipient or somehow incinerated.

### BRIEF DESCRIPTION OF THE DRAWINGS

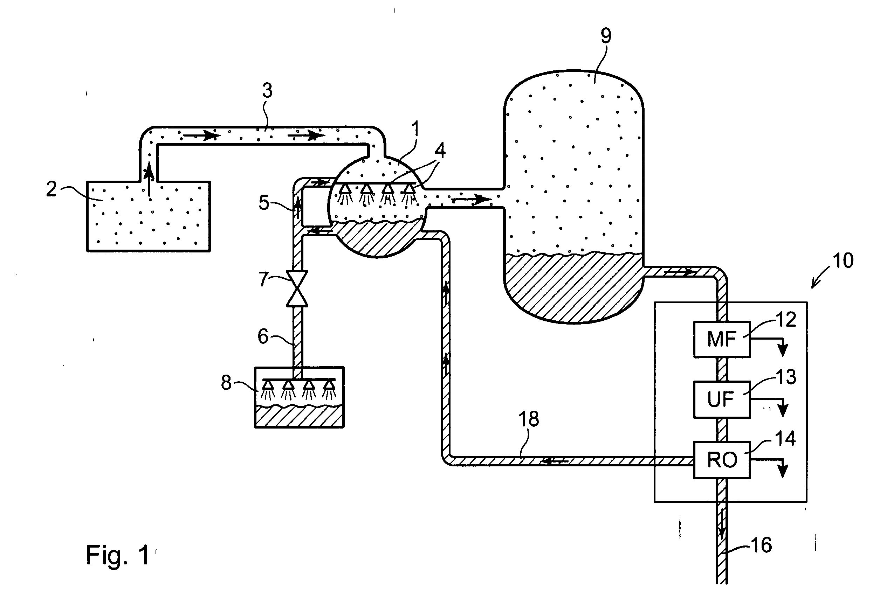

The invention will now be explained more closely with reference to the appended figure 1.
- Fig. 1: shows a device for purifying and recovering energy of flue gases according to an embodiment of the invention.

### DETAILED DESCRIPTION OF PREFERRED EMBODIMENTS OF THE INVENTION

Figure 1 shows a flue gas condenser plant utilizing the present invention. The plant comprises a quench unit 1 adapted to receive flue gases from a boiler 2 through a pipe 3, to add water to the flue gases in order to achieve a high level of moistness and if possible reach saturation temperature of the flue gases, and to purify the flue gases in order to separate at least some of the contaminations of the gases. In this embodiment, the spraywater is added by means of nozzles 4 arranged in the quench unit 1. In the quench unit, the flue gas is cooled to its saturation temperature, which is about 65-70°C. A main part of the added water is vaporized and accompanies the flue gases to the condenser unit 9, but a smaller part remains in the water phase and is used for purifying the flue gases. The flue gas is purified since some of the impurities, such as chlorides, in the gas are solved in the added water. The contaminated water is collected in the bottom of the quench unit 1. The contaminated water, collected in the bottom of the quench unit, is reused for damping the flue gases from the boiler. The contaminated water in the lower part of the quench unit is transferred, via a conduit 5, to the upper part of the quench and added to the flue gases through the nozzles 4.

Over time, the concentration of impurities in the water, collected in the bottom of the quench, is increased. In order to avoid crystallization of the impurities, a small amount of the water is lead away via a conduit 6 and a valve 7. Alternatively, the water is pumped away via the conduit 6, without the valve 7. The contaminated water from the quench unit can be handled in a number of different ways. For example, it may be used to damp the ashes from the boiler, or it may be further purified or incinerated in other way. In the figure, a part of the contaminated water from the quench is transferred to an ash-damping unit 8 adapted to moisturize ashes from the boiler. The flue gases from the quench unit are transported to a condenser unit 9, in which the flue gases are condensed and thereby energy is recovered from the flue gases.

Form the condenser unit 9, the condensed water is further transported to a purifying unit 10, which purifies the liquid and separates it into a purified liquid part and a contaminated liquid part including contaminated water. The purified liquid part can, for example, be reused some were else in the plant or let out as clean water. The purifying unit can be designed in many different ways. In this embodiment, the purifying unit comprises a micro filter 12 for separating larger particles, such as ash dust and fibers, an ultra filter 13 for separating suspended material, heavy metals, tar products, and larger organic molecules, a desalination unit, more particularly a reverse osmosis unit 14, for separating solved salt and metal irons. The amount of contaminated liquid, separated by the micro filter 12 and the ultra filter 13, is very small is easy to take care of. Taken together, the separated parts from those filters are less than 1% of the total flow of liquid from the condenser unit 9. The purified liquid part is typically between 80 and 95% of the total flow of liquid from the condenser unit 9. The purified liquid part is transported through a conduit 16 and can be reused somewhere in the plant, which needs clean water.

The reverse osmosis unit 14 produces a flow of contaminated water, which is about 5 - 15% of the total flow of condensed water supplied to the purifying unit 10. The contaminated water from the reverse osmosis unit 14 is transported via a conduit 18 to the quench unit 1. This flow compensates for the flow of water lead away from the quench unit through the conduit 6 and the vaporized water following the flue gases to the condenser. Thus, the contaminated water from the reverse osmosis unit 14 controls the level of water in the quench unit 1. Due to the high temperature and the evaporation effect of the flue gases from the boiler, the contaminated water in the quench unit is concentrated. Thus, the quench unit 1 functions as a concentrator, which concentrates the contaminated water from the reverse osmosis unit 14. In order to avoid that the concentration of impurities becomes too high in the water in the quench unit 1, a part of the contaminated water from the quench unit is let out through the way 6.

As a matter of fact here in a balance between incoming and outgoing flow of water and gas in the quench unit 1. As an example, the incoming flow of contaminated water to the quench unit from the reverse osmosis unit 14 is about 10-20% of the total inflow to the quench unit and the flow of water added to the quench unit through the flue gas from the boiler through the pipe 3 is about 80-90% of the total inflow, and the outgoing flow of "saturated" (or gas with high content of moisture) flue gases to the condenser is about 95-98% of the total outgoing flow from the quench unit and the outgoing flow of contaminated water through the conduit 6 is about 1-3% of the total outgoing flow. Thus, the total outgoing flow of contaminated water from the plant has been reduced with >95-98% compared to a plant not utilizing the invention.

The present invention is not limited to the embodiments disclosed but may be varied and modified within the scope of the following claims. For example, contaminated liquid from other purifying steps in the purifying unit can be led to the quench unit, in the same way as from the reverse osmosis unit.

## Claims

1. A method for purifying and recovering energy of flue gases from a boiler (2), wherein the method comprises:
adding water to the flue gases from the boiler in order to achieve cooling and increase the moisture content of the flue gases,
condensing the flue gases to a liquid in order to recovering energy from the flue gases,
purifying the liquid and separating the liquid into a purified liquid part including purified water and a contaminated liquid part including contaminated water, **characterized in that** at least a fraction of said contaminated liquid part is added to the flue gases from the boiler in order to achieve cooling and higher moisture content of the flue gases.

2. The method according to claim 1, wherein said purifying of the liquid includes purifying the liquid by means of a desalination process and said contaminated liquid part originates from the desalination process.

3. The method according to claim 1 or 2, wherein water is added to the flue gases in a quench unit, and the method comprises using contaminated water from the quench unit to moisturize ashes from the boiler.

4. A device for purifying and recovering energy of flue gases from a boiler (2), wherein the device comprises:
a quench unit (1) adapted to receive the flue gases from the boiler, and to add water to the flue gases in order to achieve cooling and to increase the moisture content of the flue gases,
a condenser unit (9) adapted to receive flue gases from the quench unit, to condense the flue gases to a liquid and thereby recovering energy from flue gases, and
a purifying unit (10) adapted to receive the liquid from the condenser unit, to purify the liquid and separate it into a purified part including essentially purified water and a contaminated part including contaminated water, **characterized in that** the device comprises means (18) for supplying at least a fraction of said contaminated part of the liquid to the quench unit, and the quench unit comprises means (5,4) for adding said contaminated part of the liquid to the flue gases in order to achieve-cooling and higher moisture content of the flue gases.

5. The device according to claim 4, wherein said purifying unit comprises means (14) for purify the liquid by means of a desalination process, and said contaminated liquid part arises from the desalination process.

6. The device according to claim 4 or 5, wherein it comprises means (6,7) for supplying contaminated water from said quench unit (1) to an ash damping unit (8) adapted to moisturize ashes from the boiler.

## Patentansprüche

1. Ein Verfahren zum Reinigen und Rückgewinnen von Energie von Abgasen von einem Kessel, wobei das Verfahren umfasst:
Hinzufügen von Wasser zu den Abgasen von dem Kessel, um eine Kühlung zu erzielen und den Feuchtigkeitsgehalt der Abgase zu erhöhen;
Kondensieren der Abgase zu einer Flüssigkeit, um Energie aus den Abgasen rückzugewinnen;
Reinigen der Flüssigkeit und Separieren der Flüssigkeit in einen gereinigten Flüssigkeitsteil, der gereinigtes Wasser beinhaltet, und einen kontaminierten Flüssigkeitsteil, der kontaminiertes Wasser beinhaltet, **dadurch gekennzeichnet, dass** zumindest ein Anteil des kontaminierten Flüssigkeitsteils zu den Abgasen von dem Kessel hinzugefügt wird, um eine Kühlung und einen höheren Feuchtigkeitsgehalt der Abgase zu erzielen.

2. Das Verfahren nach Anspruch 1, wobei das Reinigen der Flüssigkeit Reinigen der Flüssigkeit mittels eines Entsalzungsprozesses beinhaltet und der kontaminierte Flüssigkeitsteil aus dem Entsalzungsprozess stammt.

3. Das Verfahren nach Anspruch 1 oder 2, wobei Wasser zu den Abgasen in einer Löscheinheit hinzugefügt wird, und das Verfahren das Verwenden von kontaminiertem Wasser von der Löscheinheit umfasst, um Aschen von dem Kessel zu befeuchten.

4. Eine Vorrichtung zum Reinigen und Rückgewinnen von Energie von Abgasen von einem Kessel (2), wobei die Vorrichtung umfasst:
eine Löscheinheit (1), die eingerichtet ist, die Abgase von dem Kessel zu empfangen, und den Abgasen Wasser hinzuzufügen, um eine Kühlung zu erzielen und den Feuchtigkeitsgehalt der Abgase zu erhöhen,
eine Kondensationseinheit (9), die eingerichtet ist, Abgase von der Löscheinheit zu empfangen, die Abgase zu einer Flüssigkeit zu kondensieren und dabei Energie von den Abgasen rückzugewinnen; und
eine Reinigungseinheit (10), die eingerichtet ist, Flüssigkeit von der Kondensationseinheit zu empfangen, die Flüssigkeit zu reinigen und sie in einen gereinigten Teil, der im Wesentlichen gereinigtes Wasser beinhaltet, und einen kontaminierten Teil, der kontaminiertes Wasser beinhaltet, zu separieren, **dadurch gekennzeichnet, dass** die Vorrichtung ein Mittel (18) umfasst zum Liefern zumindest eines Anteils des kontaminierten Teils der Flüssigkeit an die Löscheinheit, und die Löscheinheit ein Mittel (5, 4) umfasst zum Hinzufügen des kontaminierten Teils der Flüssigkeit zu den Abgasen, um eine Kühlung und einen höheren Feuchtigkeitsgehalt der Abgase zu erzielen.

5. Die Vorrichtung nach Anspruch 4, wobei die Reinigungseinheit ein Mittel (14) umfasst zum Reinigen der Flüssigkeit mittels eines Entsalzungsprozesses und der kontaminierte Flüssigkeitsteil von dem Entsalzungsprozess stammt.

6. Die Vorrichtung nach Anspruch 4 oder 5, wobei sie ein Mittel (6, 7) umfasst zum Liefern von kontaminierten Wasser von der Löscheinheit (1) an eine Aschebefeuchtungsseinheit (8), die eingerichtet ist, Aschen von dem Kessel zu befeuchten.

## Revendications

1. Procédé pour purifier et récupérer l'énergie des gaz de combustion d'une chaudière (2), dans lequel le procédé comprend des étapes consistant à:
ajouter de l'eau aux gaz de combustion provenant de la chaudière afin d'obtenir le refroidissement et l'augmentation de la teneur en humidité des gaz de combustion,
condenser les gaz de combustion en un liquide afin de récupérer l'énergie des gaz de combustion,
purifier le liquide et séparer le liquide en une partie de liquide purifiée comprenant l'eau purifiée et une partie de liquide contaminée comprenant l'eau contaminée, **caractérisé en ce qu'**au moins une partie de ladite partie de liquide contaminée est ajoutée aux gaz de combustion provenant de la chaudière afin d'obtenir le refroidissement et une plus haute teneur en humidité des gaz de combustion.

2. Procédé selon la revendication 1, dans lequel ladite étape de purification du liquide comprend l'étape consistant à purifier le liquide au moyen d'un procédé de désalinisation et ladite partie de liquide contaminée provient du procédé de désalinisation.

3. Procédé selon la revendication 1 ou 2, dans lequel l'eau est ajoutée aux gaz de combustion dans une unité d'arrosage, et le procédé comprend l'étape consistant à utiliser l'eau contaminée provenant de l'unité d'arrosage pour humidifier les cendres provenant de la chaudière.

4. Dispositif pour purifier et récupérer l'énergie des gaz de combustion d'une chaudière (2), dans lequel le dispositif comprend :
une unité d'arrosage (1) adaptée pour recevoir les gaz de combustion de la chaudière, et pour ajouter de l'eau aux gaz de combustion afin d'obtenir le refroidissement et pour augmenter la teneur en humidité des gaz de combustion,
une unité de condenseur (9) adaptée pour recevoir les gaz de combustion de l'unité d'arrosage, afin de condenser les gaz de combustion en un liquide et récupérer ainsi l'énergie des gaz de combustion, et
une unité de purification (10) adaptée pour recevoir le liquide provenant de l'unité de condenseur, afin de purifier le liquide et le séparer en une partie purifiée comprenant essentiellement de l'eau purifiée et en une partie contaminée comprenant de l'eau contaminée, **caractérisé en ce que** le dispositif comprend des moyens (18) pour alimenter au moins une partie de ladite partie contaminée du liquide à l'unité d'arrosage et l'unité d'arrosage comprend des moyens (5, 4) pour ajouter ladite partie contaminée du liquide aux gaz de combustion afin d'obtenir le refroidissement et une teneur plus importante en humidité des gaz de combustion.

5. Dispositif selon la revendication 4, dans lequel ladite unité de purification comprend des moyens (14) pour purifier le liquide au moyen d'un procédé de désalinisation, et ladite partie de liquide contaminée provient du procédé de désalinisation.

6. Dispositif selon la revendication 4 ou 5, dans lequel il comprend des moyens (6, 7) pour alimenter l'eau contaminée de ladite unité d'arrosage (1) à une unité d'humidification de cendres (8) adaptée pour humidifier les cendres provenant de la chaudière.
